# EUROPEAN PATENT APPLICATION

(11) **EP 4 586 612 A1**
(43) Date of publication of application: **16.07.2025**
(21) Application number: 24151513.9
(22) Date of filing: 12.01.2024
(51) Int. Cl.: H04N 19/597, H04N 13/111, H04N 13/161, H04N 19/70

(54) **ENCODING AND DECODING IMMERSIVE VIDEO**

(71) Applicant: Koninklijke Philips N.V., 5656 AG Eindhoven (NL)
(72) Inventor: VAN GEEST, Bartholomeus Wilhelmus Damianus, 5656 AG Eindhoven (NL); KROON, Bart, 5656 AG Eindhoven (NL)
(74) Representative: Philips Intellectual Property & Standards

(57) **Abstract**

A bitstream, an encoder and method for encoding the bitstream, and a decoder and method for decoding the bitstream. The bitstream comprises an encoded volumetric representation of a scene and an encoded light field (i.e. view-dependent) representation for view-dependent region(s) of the scene.

## Description

### FIELD OF THE INVENTION

The invention relates to the field of immersive video.

### BACKGROUND OF THE INVENTION

Six degree of freedom (6 DoF) immersive video allows a scene to be viewed from different positions and orientations. The creation of 6 DoF immersive video typically uses multiple cameras to acquire image frames of a scene from different viewpoints. The acquired image frames are used to generate an image frame at a new viewpoint.

Information from the acquired image frames of the scene that can be used to generate an image frame at a target viewpoint may be encoded in an atlas-based format. Typically, this involves processing the acquired image frames to identify redundant regions; the redundant regions are then discarded, and the remaining regions are packed into an atlas. The atlas is then encoded, along with associated metadata, into a bitstream. A device receiving the encoded atlas and metadata is able to generate an image frame at a target viewpoint by using the metadata to reconstruct the image regions into an image frame at the target viewpoint.

This process relies on the assumption that objects in the scene have Lambertian (i.e. diffuse) reflective properties. Surfaces having non-Lambertian reflective properties, such as glossy surfaces, cannot be rendered to a different viewpoint using an image region of the surface from a single viewpoint, as the photometric appearance of such surfaces depends on the viewpoint.

### SUMMARY OF THE INVENTION

The invention is defined by the claims.

According to examples in accordance with an aspect of the invention, there is provided a bitstream comprising: an encoded volumetric representation of a scene; and an encoded light field representation for one or more regions of the scene.

The volumetric representation and the light field representation each provide three-dimensional information for the scene. In the volumetric representation of the scene, viewpoint-dependent effects (such as effects due to glossy surfaces) have been removed or averaged. The light field representation of the scene may be a residual light field representation; that is, a representation that defines differences between the volumetric representation and the video data used to generate the volumetric representation; these differences are due to viewpoint-dependent effects.

In particular, the light field representation for the scene represents the light field in regions containing glossy surfaces or other view-dependent surfaces. By combining the volumetric representation and the light field representation in a bitstream, the bitstream contains sufficient information to enable view-dependent surfaces in the scene to be rendered accurately at a variety of viewpoints.

The inventors have recognized that including a light field representation only for part of the scene reduces a bit-rate and pixel-rate of the bitstream, and a complexity of using the bitstream to render an image at a target viewpoint, while still including view-dependent aspects of the scene.

In some examples, the encoded light field representation has a smaller scale than the encoded volumetric representation.

The inventors have recognized that view-dependent lighting properties do not require as high a resolution as other visual elements. The light field representation may therefore be computed at a smaller scale than the volumetric representation or downscaled (by a larger scaling factor if the volumetric representation is downscaled) while still enabling regions with view-dependent aspects to be reconstructed to a desired quality. In this way, the bit rate and pixel rate of the light field representation may be reduced.

In some examples, the bitstream further comprises an indication of whether use of the light field representation in rendering is required or optional.

An indication that the light field representation is optional means that the volumetric representation may by itself be used to render an image of the scene at a target viewpoint (albeit without any view-dependent lighting effects). This allows the light field representation to be discarded, or ignored during rendering, if required.

In some examples, the bitstream further comprises an indication of how to combine the volumetric representation and the light field representation in rendering.

In some examples, the bitstream further comprises an indication of how to interpolate different parts of the light field representation.

According to examples in accordance with another aspect of the invention, there is provided a method for encoding immersive video, the method comprising: obtaining video data comprising a plurality of views of a scene; processing the video data to generate a volumetric representation of the scene; processing the video data and the volumetric representation to identify any differences between the video data and the volumetric representation; processing the video data for any regions of the scene containing an identified difference to define a light field representation of the region or regions; and encoding the volumetric representation and the light field representation into a bitstream.

There is also provided a method for decoding immersive video, the method comprising: receiving a bitstream comprising an encoded volumetric representation of a scene and an encoded light field representation for one or more regions of the scene; decoding the volumetric representation and the light field representation; defining a target viewpoint; processing the light field representation to define a position of one or more first regions in an image frame at the target viewpoint, the one or more first regions corresponding to the one or more regions of the scene represented by the light field representation; for each pixel of the one or more first regions, processing the light field representation to determine a first pixel value for the pixel; processing the volumetric representation to define a position of one or more second regions in the image frame at the target viewpoint; for at least a subset of pixels of the one or more second regions, processing the volumetric representation to determine a second pixel value for each pixel; and for each pixel having both a first pixel value and a second pixel value, processing the first pixel value and second pixel value to determine a final pixel value for the pixel.

In this way, an image frame at a target viewpoint may be rendered with an accurate photometric appearance of the scene for the target viewpoint with less complexity than using a full light field representation to render the entire image frame.

The one or more first regions are regions of the target image containing one or more objects in the scene having a view-dependent appearance. The one or more second regions may overlap the one or more first regions.

In some examples, the step of processing the first pixel value and second pixel value to determine a final pixel value for the pixel comprises a blending of the first pixel value and the second pixel value.

In some examples, the volumetric representation is processed to determine a second pixel value only for pixels that do not have full visibility in the light field representation.

In other words, having determined the first pixel values for at least an area of the image frame at the target viewpoint, a second pixel value may not be determined for pixels for which the first pixel value has 0% transparency. This reduces the occurrence of unnatural transients.

In some examples, the step of processing the first pixel value and second pixel value to determine a final pixel value for the pixel comprises an additive combination of the first pixel value and second pixel value.

In some examples, the method further comprises: obtaining inpainted data for one or more areas of the image frame; and for any pixels having neither a first pixel value nor a second pixel value, processing the inpainted data to determine a third pixel value for the pixel.

In some examples, each first pixel value is determined using a first rendering technique; and each second pixel value is determined using a second, different rendering technique.

For instance, the second pixel values may be determined using a simple rendering technique (such as z-buffering), while the first pixel values may be determined using a more complex rendering technique. This provides a high-quality rendering of view-dependent effects in the image frame without unduly increasing rendering complexity (thus enabling the image frame to be rendered more efficiently).

There is also provided a computer program product comprising computer program code means which, when executed on a computing device having a processing system, cause the processing system to perform all of the steps of any of the methods described above.

According to examples in accordance with another aspect of the invention, there is provided an encoder configured to encode immersive video, the encoder being configured to: obtain video data comprising a plurality of views of a scene; process the video data to generate a volumetric representation of the scene; process the video data and the volumetric representation to identify any differences between the video data and the volumetric representation; process the video data for any regions of the scene containing an identified difference to define a light field representation of the regions; and encode the volumetric representation and the light field representation into a bitstream.

There is also provided a decoder configured to decode immersive video, the decoder being configured to: receive a bitstream comprising an encoded volumetric representation of a scene and an encoded light field representation for one or more regions of the scene; decode the volumetric representation and the light field representation; define a target viewpoint; process the light field representation to define a position of one or more first regions in an image frame at the target viewpoint, the one or more first regions corresponding to the one or more regions of the scene represented by the light field representation; for each pixel of the one or more first regions, process the light field representation to determine a first color value for the pixel; process the volumetric representation to define a position of one or more second regions in the image frame at the target viewpoint; for at least a subset of pixels of the one or more second regions, process the volumetric representation to determine a second pixel value for each pixel; and for each pixel having both a first pixel value and a second pixel value, process the first pixel value and second pixel value to determine a final pixel value for the pixel.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates an immersive video system, according to an embodiment of the invention;
Fig. 2 illustrates a method for encoding immersive video, according to an embodiment of the invention; and
Fig. 3 illustrates a method for decoding immersive video, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bitstream, an encoder and method for encoding the bitstream, and a decoder and method for decoding the bitstream. The bitstream comprises an encoded volumetric representation of a scene and an encoded light field (i.e. view-dependent) representation for view-dependent region(s) of the scene.

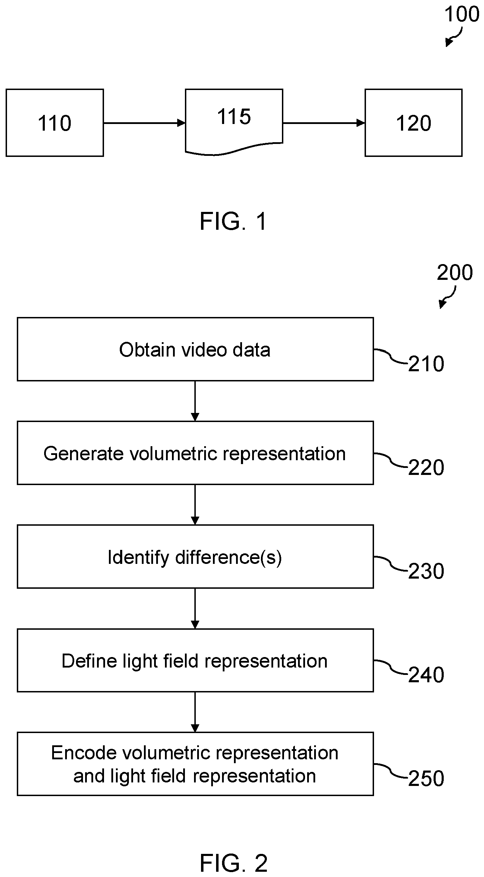

Fig. 1 illustrates an immersive video system 100, according to an embodiment of the invention. The immersive video system comprises an encoder 110 and a decoder 120. The encoder is configured to output a bitstream 115, which is received by the decoder. In Fig. 1, the bitstream 115 is transmitted directly from the encoder to the decoder; however, as the skilled person will readily appreciate, the bitstream may alternatively be stored on a suitable storage medium before being transmitted to the decoder.

The bitstream 115 is, itself, an embodiment of the invention. The bitstream comprises an encoded volumetric representation of a scene and an encoded light field representation for the one or more regions of the scene. The encoded light field representation is a view-dependent representation of the scene, while the encoded volumetric representation is not view-dependent. For instance, the encoded volumetric representation may provide a color value for each of a plurality of points in the scene, while the encoded light field representation may provide a color and/or transparency value for each of a plurality of rays in the one or more regions of the scene. The one or more regions of the scene are one or more regions that contain view-dependent surfaces, such as glossy surfaces and surfaces having specular highlights. In some examples, the one or more regions of the scene may be represented in the volumetric representation as well as the light field representation; in other examples, some or all of the one or more regions represented by the light field representation may not be included in the volumetric representation.

In some examples the encoded light field representation may fully describe the light field for the one or more regions of the scene; in other examples, the encoded light field representation may contain only view-dependent aspects of the light field of, and may only fully describe the light field when combined with the volumetric representation of the scene. The light field representation and the volumetric representation are described in more detail below.

Various alternatives are envisaged for arranging the encoded volumetric representation and the encoded light field representation within the bitstream 115. For instance, the encoded volumetric representation and the encoded light field representation may be provided in different atlases of the bitstream, or a single atlas may contain both patches of the volumetric representation and patches of the light field representation. In some examples, patches of the volumetric representation and patches of the light field representation may be arranged within an atlas such that the patches of the volumetric representation and the patches of the light field representation are contained in different tiles of the atlas. The bitstream may further comprise metadata indicating which atlas(es), tile(s) and/or patch(es) (as appropriate) contain (part of) the volumetric representation and which contain (part of) the light field representation.

In some examples, the encoded light field representation has a smaller scale than the encoded volumetric representation. The inventors have recognized that a separate representation of the view-dependent aspects of the one or more regions of the scene (i.e. separate to a representation of other visual elements of the scene) can be downscaled by a large scaling factor (i.e. larger than is typically used for downscaling a representation of a scene in immersive video applications), or computed at a smaller scale than is typical for a representation of a scene in immersive video applications, without noticeably affecting a quality of reconstruction of the view-dependent effects. In some examples, different parts of the light field representation may be downscaled in the bitstream by different scaling factors. The bitstream may further comprise metadata providing the scaling factor by which the light field representation (or a particular part of the light field representation) has been downscaled; alternatively, the scaling factor may be provided by external means.

In some examples, the bitstream 115 may further comprise an indication of whether use of the light field representation in rendering is required or optional (e.g. provided in the metadata of the bitstream). The bitstream may comprise an indication that the light field representation is required for rendering where the light field representation represents one or more regions of the scene that are not represented by the volumetric representation. Conversely, the bitstream may comprise an indication that the light field representation is optional where the volumetric representation represents the entire scene (i.e. any region of the scene that is represented by the light field representation is also represented by the volumetric representation). If the bitstream comprises an indication that the light field representation is optional, any downscaling or thinning that is performed on the bitstream may be carried out by downscaling or removing the light field representation, as the volumetric representation by itself provides sufficient information to allow a complete view of the scene to be rendered at a target viewpoint (albeit at a lower quality than if the light field representation is also used).

In some examples, the bitstream 115 may further comprise an indication of how to combine the volumetric representation and the light field representation in rendering (e.g. provided in the metadata of the bitstream). For instance, where the light field representation does not, by itself, fully describe the light field for the one or more regions, the bitstream may comprise an indication to use an additive technique. Where the light field representation fully describes the light field for the one or more regions, the bitstream may comprise an indication to use a blending technique. Techniques for combining the volumetric representation and the light field representation in rendering are described in more detail below.

In some examples, the bitstream 115 may comprise an indication of how to interpolate different parts of the light field representation (e.g. provided in the metadata of the bitstream). For instance, the bitstream may comprise an indication that different parts of the light field representation that overlap in a target viewpoint are to be blended when rendering an image frame of the scene at the target viewpoint. In some examples, the indication may comprise a definition of the (non-linear) transient of one view of the light field representation to another view.

Fig. 2 illustrates a method 200 for encoding immersive video, according to an embodiment of the invention. The method 200 may be used by the encoder 110 of Fig. 1 to generate the bitstream 115.

The method 200 begins at step 210, at which video data comprising a plurality of view of a scene is obtained. The video data may comprise a plurality of sequences of video frames, each sequence having been acquired by a camera having a different position and/or orientation.

At step 220, the video data is processed to generate a volumetric representation of the scene. The volumetric representation is a representation of the scene that is not view-dependent (i.e. a representation that does not describe how the color of a part of the scene varies depending on the viewpoint).

For instance, the volumetric representation may be generated by, for each pixel in at least one image frame of the video data, identifying corresponding pixels in image frames for other views of the scene (e.g. using depth information for the scene and the position/orientation of the cameras used to acquire the video data) to define a set of pixels for each of a plurality of points in the scene. Outlier pixels (e.g. due to occlusion) may be removed from each set of pixels, and the remaining pixels in a set may be processed to determine a color for the point in the scene in the volumetric representation (e.g. the color for the point may be the mean color or the minimum (i.e. darkest) color in the set). The determination of the color for the point in the volumetric representation affects how the volumetric representation and the light field representation are to be combined when rendering an image frame at a target viewpoint. For instance, where the minimum color in each set is selected, an additive combination involving only positive color values may be used in rendering. Where the mean color for each set is used in the volumetric representation, an additive combination involving delta color values may be used in rendering.

The volumetric representation of the scene may comprise a plurality of texture patches and a plurality of depth patches, as is typically used when encoding immersive video according to the MPEG Immersive Video (MIV) standard. The texture patches provide texture information (e.g. color) for regions of the scene captured by the video data, while the depth patches provide depth information for regions of the scene. Each depth patch may correspond to a texture patch.

At step 230, the video data and the volumetric representation are processed to identify any differences between the video data and the volumetric representation.

At step 240, the video data for any regions of the scene containing an identified difference is processed to define a light field representation of each region containing an identified difference.

In some examples, the differences between the video data and the volumetric representation may be identified by, for each view of the video data (i.e. each "source view"), reprojecting the volumetric representation to the source view. A residual signal that defines the difference between the source view and the respective reprojection may be computed for each source view. The computation of the residual signal may depend on how the volumetric representation and the light field representation are to be combined when rendering an image frame at a target viewpoint. For instance, where an additive combination technique is used, the residual signal may comprise color values only (e.g. positive color values only where the volumetric representation provides the minimum color for each point in the scene, or delta color values where the volumetric representation provides the mean color for each point in the scene). Where a blending technique is used, the residual signal may comprise color and transparency values (e.g. RGBA values) or color values that are premultiplied by a transparency value (e.g. [R.A, G.A, B.A, A] or an equivalent in another color space).

The light field representation may comprise the residual signals for at least a subset of source views, and corresponding depth information. In some examples, the residual signals for all source views may be processing to select a subset of residual signals that enable the view dependency of the scene to be modelled to a desired quality, and the light field representation may comprise the selected subset and corresponding depth information. As the skilled person will appreciate, the number of residual signals in such a subset will depend on the reflective properties of the surfaces in the scene and the complexity of lighting in the scene as well as the desired quality.

In some examples, the differences between the volumetric representation and the video data may be identified only for regions of the scene that have already been identified as containing one or more view-dependent surfaces (e.g. surfaces having non-Lambertian reflective properties, such as glossy surfaces and surfaces with specular highlights). Regions containing view-dependent surfaces may be identified by reprojecting each source view in the video data to at least one other source view, and comparing depth information for the source views to identify regions for which points having the same 3D position in the scene have different color values in different source views (i.e. for which the difference in color values exceeds a predetermined difference threshold, or a threshold adjusted according to available resources such as pixel rate).

Thus, in some examples where the light field representation comprises residual signals and corresponding depth information, the residual signals may each define the difference between a region of a source view identified as containing one or more view-dependent surfaces and a corresponding region of a reprojection of the volumetric representation to the respective source view.

In other examples, the differences between the volumetric representation and the video data may be identified for entire source views to compute a residual signal. Regions for which the residual signal is below a predetermined signal threshold may then be identified as regions having little or no view-dependency; the residual signal for these regions may be omitted from the light field representation.

At step 250, the volumetric representation and the light field representation are encoded into a bitstream. Metadata enabling the encoded volumetric representation and light field representation to be decoded and used to render an image frame at a target viewpoint may also be encoded into the bitstream. In some examples, the volumetric representation and the light field representation may be encoded into one or more video sub-bitstreams, and the metadata may be encoded into a metadata sub-bitstream; the sub-bitstreams may then be multiplexed to form the bitstream. The volumetric representation, the light field representation and the metadata may be encoded using any suitable codec.

As described above with reference to the bitstream 115 of Fig. 1, the metadata may comprise information identifying positions of the volumetric representation and the light field representation in the bitstream (e.g. information identifying which atlas(es), tile(s) and/or patch(es) contain (part of) the volumetric representation and which contain (part of) the light field representation), and information the position and/or orientation of each of the cameras used to obtain the video data of the scene. In some examples, the metadata may include an indication of how to combine the volumetric representation and the light field representation in rendering, as described above. In some examples, the metadata may include an indication of how to interpolate different parts of the light field representation, as described above.

In some examples, the light field representation may be encoded at a smaller scale than the volumetric representation. For instance, the step 250 of encoding the volumetric representation and the light field representation into the bitstream may comprise a sub-step of downscaling the light field representation. Alternatively, the light field representation may be computed at a smaller scale (e.g. by downscaling the video data, or at least the regions of the scene to be represented by the light field representation, prior to computing the light field representation). The scaling factor(s) for the light field representation may be included in the metadata in the bitstream.

In some examples, different parts of the light field representation may be downscaled by different scaling factors. For instance, where the light field representation comprises residual signals and corresponding depth information, a desired scaling factor may be determined for each residual signal and its corresponding depth information. The desired scaling factor for each residual signal and its corresponding depth information may be determined such that a residual signal and depth information for a given source view (or region of a source view, as appropriate) downscaled by the desired scaling factor allows the source view to be reconstructed with a desired quality. In some examples, the desired scaling factor may be determined based on an error metric such as the sum of differences between the original light field representation and a light field representation obtained by (color adaptive) upscaling of the downscaled light field representation.

Each residual signal and its corresponding depth information may then be downscaled by the desired scaling factor for the residual signal. The desired scaling factors and information identifying the residual signal(s) and depth information associated with each desired scaling factor may be included in the metadata.

In some examples, the volumetric representation encoded in the bitstream may be the volumetric representation for only part of the scene. For instance, regions of the volumetric representation corresponding to regions of the scene that are fully represented in the light field representation (e.g. highly specular regions that are captured by all views of the light field representation) may be removed from the volumetric representation, and the remaining volumetric representation may be encoded into the bitstream. In other examples, the volumetric representation may represent all regions of the scene (i.e. including all regions that are represented by the light field representation).

The metadata in the bitstream may include an indication of whether use of the light field representation in rendering is required (i.e. in cases where the volumetric representation does not represent the entire scene) or optional (i.e. in cases where regions represented by the light field representation are also represented by the volumetric representation).

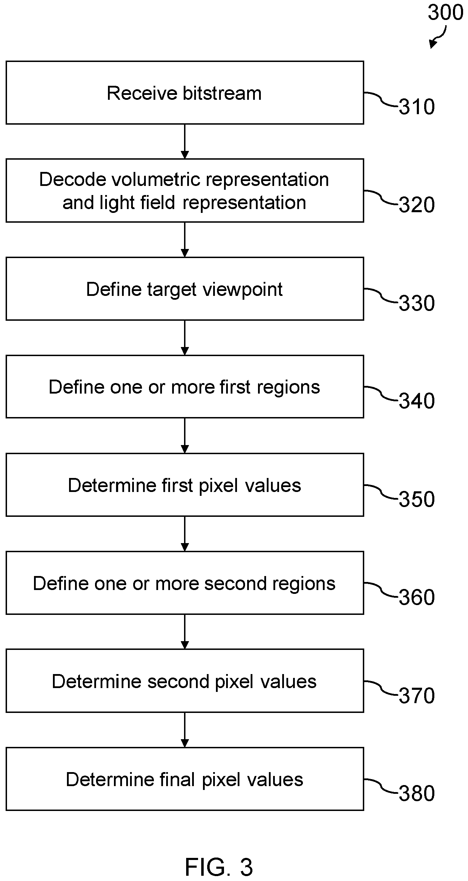

Fig. 3 illustrates a method 300 for decoding immersive video, according to an embodiment of the invention. The method 300 may be used by the decoder 120 of Fig. 1 to decode the bitstream 115.

The method 300 begins at step 310, at which a bitstream is received. The bitstream comprises an encoded volumetric representation of a scene and an encoded light field representation for one or more regions of the scene. The bitstream may further comprise associated metadata (e.g. metadata identifying the encoded volumetric representation and the encoded light field representation in the bitstream, information defining the position and/or orientation of each of the cameras used to obtain video data of the scene from which the volumetric representation and light field representation were generated, etc.). For instance, the received bitstream may be the bitstream 115 described above with reference to Fig. 1.

At step 320, the volumetric representation and the light field representation are decoded. The volumetric representation and the light field representation may be decoded using any suitable codec.

At step 330, a target viewpoint is defined. The target viewpoint is a viewpoint at which an image frame of the scene is to be rendered.

At step 340, the light field representation is processed to define a position of one or more first regions in an image frame at the target viewpoint. The one or more first regions correspond to the one or more regions of the scene represented by the light field representation. In other words, the light field representation is warped to the target viewpoint. In some examples, where more than one first region is defined, first regions may overlap one another (i.e. where different parts of the light field representation overlap in the target viewpoint).

For instance, as described above, the light field representation may comprise residual signals defining differences between the volumetric representation and the source views used to generate the volumetric representation, and corresponding depth information. The one or more first regions may be defined by warping at least a subset of the residual signals to the target view using the corresponding depth information (e.g. warping at least residual signals for the source views having a viewpoint closest to the target viewpoint). For example, each warped residual may define a first region.

In some examples, the light field representation may have been encoded at a smaller scale in the bitstream, as described above. The scaling factor(s) for the light field representation may be provided in metadata of the bitstream or provided by external means. In these examples, the step 340 of defining the position of the one or more first regions in the image frame at the target viewpoint may comprise a substep of rescaling the light field representation using the scaling factor(s) (i.e. by upscaling each part of the light field representation by the relevant scaling factor). For instance, if the light field representation (or a part of the light field representation) was downscaled by a factor of 16, the light field representation (or the relevant part, as appropriate) may be rescaled by upscaling by a factor of 16.

At step 350, the light field representation is processed to determine a first pixel value for each pixel in the one or more first regions. The determined pixel values may be color values for the pixels. In some examples, the pixel values may include transparency.

In some examples, metadata in the bitstream may comprise an indication of how to interpolate different parts of the light field representation; where this indication is provided, the first pixel value for any pixel belonging to more than one first region may be determined by interpolating the different parts of the light field representation as instructed by the indication. If no indication is provided, a predefined default interpolation technique may be used.

For instance, where the light field representation comprises residual signals and corresponding depth information as described above and each first region is defined by warping a residual signal, the first pixel value for each pixel belonging to a single first region is determined as the value of the relevant warped residual signal for the pixel. For pixels that belong to more than one first region, each warped residual signal defining a first region to which the pixel belongs may be used to determine the first pixel value: for instance, the value of each of the warped residual signals for the pixel may be weighted based on distance from the target viewpoint.

At step 360, the volumetric representation is processed to define a position of one or more second regions in the image frame at the target viewpoint. The one or more second regions may overlap the one or more first regions (for instance, where the volumetric representation represents the entire scene, the one or more second regions may together occupy the entire image frame).

At step 370, the volumetric representation is processed to determine a second pixel value for each of at least a subset of pixels in the one or more second regions. Whether a second pixel value is determined for every pixel in the one or more second regions or only a subset will depend on the technique to be used to determine the final pixel values, as explained below.

The use of a volumetric representation to determine pixel values for pixels in an image frame at a target viewpoint is well known. For instance, where the volumetric representation comprises a plurality of texture patches and a plurality of depth patches, each texture patch may be warped to the target viewpoint using the corresponding depth patch to define the one or more second regions, and the value(s) of the warped texture patch(es) to which a pixel in a second region belongs may be used to determine the second pixel value for the pixel. In order to improve rendering efficiency, the rendering technique used to determine the second pixel values may be a simple rendering technique such as z-buffering, as the more complex rendering technique(s) used in determining the first pixel values are not necessary when determining pixel values using the volumetric representation.

At step 380, for each pixel having both a first pixel value and a second pixel value, the first pixel value and the second pixel value are processed to determine a final pixel value for the pixel. The final pixel value for each pixel is the pixel value used in the image frame at the target viewpoint. For pixels having only a first pixel value, the first pixel value is the pixel value used in the image frame at the target viewpoint; similarly, for pixels having only a second pixel value, the second pixel value is the pixel value used in the image frame at the target viewpoint.

Various techniques are envisaged for processing the first pixel value and the second pixel value for a pixel to determine a final pixel value. In some examples, the metadata in the bitstream may comprise an indication of how to combine the volumetric representation and the light field representation in rendering; the final pixel values may then be determined as specified in the metadata. Where the bitstream does not provide an indication of how to combine the volumetric representation and light field representation, a predefined default technique may be used to determine the final pixel values (or the values provided for the light field representation may be used to determine which technique to use; for instance, a blending technique may be used if the light field representation includes transparency values).

In some examples, the step 380 of determining the final pixel values may comprise, for each pixel having both a first pixel value and a second pixel value, blending the first pixel value and the second pixel value for the pixel to determine the final pixel value (e.g. using a transparency of the first pixel value to alpha blend the first pixel value over the second pixel value). A blending technique may be used where the light field representation fully describes the light field for the one or more regions of the scene.

In some examples, where a blending technique is used to determine the final pixel values, second pixel values may be determined only for pixels in the one or more second regions that do not have full visibility in the light field representation. In other words, the volumetric representation may be processed to determine a second pixel value for each pixel of a subset of pixels in the one or more second regions, where the subset excludes pixels having a first pixel value with a transparency of 0% (or a transparency below a predefined transparency threshold). The subset of pixels in the one or more second regions may be generated using a culling technique to decide which regions of the volumetric representation are visible.

In some examples, the step 380 of determining the final pixel values may comprise, for each pixel having both a first pixel value and a second pixel value, an additive combination of the first pixel value and the second pixel value for the pixel. An additive technique may be used where the light field representation only fully describes the light field in combination with the volumetric representation.

For instance, in some examples (e.g. where the volumetric representation provides the minimum color for each point in the scene) , each first pixel value and each second pixel value may be a positive color value, and the final pixel value is the sum of the first and second pixel values. In other examples (e.g. where the volumetric representation provides the mean color for each point in the scene), each first pixel value may be a delta color value that defines a difference between the color for the relevant point in the scene in the volumetric representation and the color of the relevant point from the target view. A positive delta color value indicates that the color of the relevant point from the target view has a higher value than the corresponding value in the volumetric representation, while a negative delta color value indicates that the color of the relevant point from the target view has a lower value than the corresponding value in the volumetric representation. A delta color value of zero indicates that the color for the relevant point in the scene in the volumetric representation is the color of the relevant point from the target view.

It is to be understood that the steps of the method 300 of Fig. 3 are not necessarily carried out in the order shown in Fig. 3. For instance, in some examples, steps 360 and 370 may be performed prior to or in parallel with steps 340 and 350. In some examples, substeps of steps 340 to 380 may be interleaved with one another: for instance, the final pixel values for one region of the image frame at the target viewpoint may be determined before determining the first and second pixel values for another region of the image frame.

In some cases, the volumetric representation and light field representation may not provide sufficient information to allow a view of the scene to be rendered at all viewpoints (e.g. some regions of the scene may not be visible in any of the views included in the video data). This would result in, for some target viewpoints, an image frame for which some pixels have neither a first pixel value nor a second pixel value.

In some examples, inpainted data may be obtained for one or more areas of the image frame at the target viewpoint, and the inpainted data may be processed to determine a third pixel value for any pixel having neither a first pixel value nor a second pixel value. For such pixels, the third pixel value is the pixel value used in the image frame at the target viewpoint (being the only pixel value available for the pixel).

In some examples, the bitstream comprising the volumetric representation and the light field representation may further comprise inpainted data for the scene (i.e. the inpainted data for one or more areas of the image frame may be obtained by receiving and decoding the bitstream, and warping the inpainted data to the target viewpoint). For instance, the bitstream may include encoded patches of inpainted data and metadata identifying the patches of inpainted data in the bitstream, as described in International Patent Application WO2022069325.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A bitstream (115) comprising:
an encoded volumetric representation of a scene; and
an encoded light field representation for one or more regions of the scene.

2. The bitstream (115) of claim 1, wherein the encoded light field representation has a smaller scale than the encoded volumetric representation.

3. The bitstream (115) of claim 1 or 2, further comprising an indication of whether use of the light field representation in rendering is required or optional.

4. The bitstream (115) of any of claims 1 to 3, further comprising an indication of how to combine the volumetric representation and the light field representation in rendering.

5. The bitstream (115) of any of claims 1 to 4, further comprising an indication of how to interpolate different parts of the light field representation.

6. A method (200) for encoding immersive video, the method comprising:
obtaining video data comprising a plurality of views of a scene;
processing the video data to generate a volumetric representation of the scene;
processing the video data and the volumetric representation to identify any differences between the video data and the volumetric representation;
processing the video data for any regions of the scene containing an identified difference to define a light field representation of the region or regions; and
encoding the volumetric representation and the light field representation into a bitstream (115).

7. A method (300) for decoding immersive video, the method comprising:
receiving a bitstream (115) comprising an encoded volumetric representation of a scene and an encoded light field representation for one or more regions of the scene;
decoding the volumetric representation and the light field representation;
defining a target viewpoint;
processing the light field representation to define a position of one or more first regions in an image frame at the target viewpoint, the one or more first regions corresponding to the one or more regions of the scene represented by the light field representation;
for each pixel of the one or more first regions, processing the light field representation to determine a first pixel value for the pixel;
processing the volumetric representation to define a position of one or more second regions in the image frame at the target viewpoint;
for at least a subset of pixels of the one or more second regions, processing the volumetric representation to determine a second pixel value for each pixel; and
for each pixel having both a first pixel value and a second pixel value, processing the first pixel value and second pixel value to determine a final pixel value for the pixel.

8. The method (300) of claim 7, wherein the step of processing the first pixel value and second pixel value to determine a final pixel value for the pixel comprises a blending of the first pixel value and the second pixel value.

9. The method (300) of claim 7 or 8, wherein the volumetric representation is processed to determine a second pixel value only for pixels that do not have full visibility in the light field representation.

10. The method (300) of claim 7, wherein the step of processing the first pixel value and second pixel value to determine a final pixel value for the pixel comprises an additive combination of the first pixel value and second pixel value.

11. The method (300) of any of claims 7 to 10, further comprising:
obtaining inpainted data for one or more areas of the image frame; and
for any pixels having neither a first pixel value nor a second pixel value, processing the inpainted data to determine a third pixel value for the pixel.

12. The method (300) of any of claims 7 to 11, wherein:
each first pixel value is determined using a first rendering technique; and
each second pixel value is determined using a second, different rendering technique.

13. A computer program product comprising computer program code means which, when executed on a computing device having a processing system, cause the processing system to perform all of the steps of the method (200, 300) according to any of claims 6 to 11.

14. An encoder (110) configured to encode immersive video, the encoder being configured to:
obtain video data comprising a plurality of views of a scene;
process the video data to generate a volumetric representation of the scene;
process the video data and the volumetric representation to identify any differences between the video data and the volumetric representation;
process the video data for any regions of the scene containing an identified difference to define a light field representation of the regions; and
encode the volumetric representation and the light field representation into a bitstream (115).

15. A decoder (120) configured to decode immersive video, the decoder being configured to:
receive a bitstream (115) comprising an encoded volumetric representation of a scene and an encoded light field representation for one or more regions of the scene;
decode the volumetric representation and the light field representation;
define a target viewpoint;
process the light field representation to define a position of one or more first regions in an image frame at the target viewpoint, the one or more first regions corresponding to the one or more regions of the scene represented by the light field representation;
for each pixel of the one or more first regions, process the light field representation to determine a first color value for the pixel;
process the volumetric representation to define a position of one or more second regions in the image frame at the target viewpoint;
for at least a subset of pixels of the one or more second regions, process the volumetric representation to determine a second pixel value for each pixel; and
for each pixel having both a first pixel value and a second pixel value, process the first pixel value and second pixel value to determine a final pixel value for the pixel.
